# EUROPÄISCHE PATENTSCHRIFT

(11) **EP 2 846 661 B1**
(45) Veröffentlichungstag und Bekanntmachung des Hinweises auf die Patenterteilung: **16.03.2016**
(21) Anmeldenummer: 13724539.5
(22) Anmeldetag: 06.05.2013
(51) Int. Cl.: B60N 2/54, B60N 2/44, F16L 3/12, B60N 2/02, B60N 2/70

(54) **KABELBEFESTIGUNGSELEMENT AN EINER SITZFEDERMATTE FUER EINEN FAHRZEUGSITZ, SITZFEDERMATTE UND FAHRZEUGSITZ**
CABLE FIXING ELEMENT ON A SPRING MAT FOR A VEHICLE SEAT, SPRING MAT, AND VEHICLE SEAT
ÉLÉMENT DE FIXATION D'UN CÂBLE À UN TAPIS DE SIÈGE ÉLASTIQUE D'UN SIÈGE DE VÉHICULE, TAPIS DE SIÈGE ÉLASTIQUE ET SIÈGE DE VÉHICULE

(30) Priorität: 11.05.2012 DE 102012009543
(43) Veröffentlichungstag der Anmeldung: 18.03.2015
(73) Patentinhaber: Johnson Controls GmbH, 51399 Burscheid (DE)
(72) Erfinder: MATEJKO-ANGER, Sylwia, 42929 Wermelskirchen (DE)
(74) Vertreter: Liedhegener, Ralf
(86) Internationale Anmeldenummer: PCT/EP2013/059365
(87) Internationale Veröffentlichungsnummer: WO 2013/167522

(56) Entgegenhaltungen:
- EP-A1- 1 593 547
- WO-A1-03/045732
- DE-A1- 3 937 407
- DE-A1-102006 032 038
- DE-A1-102008 043 196
- DE-A1-102012 008 166
- FR-A1- 2 861 660
- GB-A- 388 490

## Beschreibung

Die Erfindung betrifft ein Befestigungselement zur Befestigung eines Kabels an einer Sitzfedermatte eines Fahrzeugsitzes mit den Merkmalen des Anspruchs 1. Die Erfindung betrifft auch eine Sitzfedermatte für einen Fahrzeugsitz mit den Merkmalen des Anspruchs 6. Die Erfindung betrifft auch einen Fahrzeugsitz mit den Merkmalen des Anspruchs 7.

### Stand der Technik

Aus der EP 1 593 547 A1 ist ein Fahrzeugsitz mit einer Sitzfedermatte bekannt. Der Fahrzeugsitz umfasst eine Rückenlehne und ein Sitzteil. Zur Erhöhung des Sitzkomforts ist an dem Sitzteil die Sitzfedermatte angebracht, welche mehrere elastisch verformbare Federdrähte umfasst, die annähernd parallel zueinander meanderförmig in Fahrtrichtung verlaufen. Unter Belastung durch das Gewicht eines Insassen federn die Federdrähte der Sitzfedermatte nach unten ein und bewirken auf diese Art eine Federung des Sitzteils. Eine ähnlich wirkende Federmatte ist auch innerhalb der Rückenlehne des Fahrzeugsitzes vorgesehen.

Die Federdrähte der Sitzfedermatte sind mittels mehrerer Verbindungselemente aus Plastik miteinander verbunden. Die Verbindungselemente weisen Löcher auf, in denen zusätzliche Elemente befestigbar sind. Dabei ist ein Kabel mittels eines Kabelbinders, der durch ein solches Loch gezogen ist, an einem Verbindungselement der Sitzfedermatte befestigt.

Zur Befestigung des Kabels an dem Verbindungselement muss der Kabelbinder durch das Loch gezogen und um das Kabel herum geschlungen werden. Der Montageaufwand zur Befestigung des Kabels an der Sitzfedermatte ist damit verhältnismäßig hoch.

Ferner ist aus der DE 10 2008 043 196 A1 ein Sitzteil für einen Fahrzeugsitz bekannt, mit zumindest zwei parallel zueinander angeordneten Seitenteilen, deren eine Enden jeweils durch einen Querholm verbunden sind. Das Sitzteil weist eine Sitzwanne auf, welche an den jeweils anderen Enden der Seitenteile verschiebbar in Längsrichtung der Seitenteile und/oder verschwenkbar angebracht ist. Ferner ist eine Quereinhängung zur Halterung zumindest einer Federmatte vorgesehen, wobei die Quereinhängung mit den Seitenteilen in diesen verschwenkbar und an der Sitzwanne verschiebbar angebracht ist.

Aus der WO 2003/045732 A1 ist eine federnde Sitzanordnung bekannt, die einen besseren Schutz der Insassen eines Fahrzeugsitzes im Falle einer rückwärtigen Kollision in einem Kraftfahrzeug bereitstellt. Diese weist ein Plattformelement zur Unterstützung für die Sitzpolsterung auf, welches in einem Rahmen der Rückenlehne eines Fahrzeugsitzes lagerbar ist. Das Plattformelement ist mit den Seitenschienen verbunden, zwischen denen sinusförmige Drahtfedern und eine Vielzahl von Verbindungsmitteln gekoppelt sind, mittels derer das Plattformelement im Rahmen des Fahrzeugsitzes unterstützt wird.

### Aufgabe

Der Erfindung liegt die Aufgabe zu Grunde, den Montageaufwand für die Befestigung eines Kabels an einer Sitzfedermatte eines Fahrzeugsitzes zu vermindern sowie die dafür anfallenden Kosten zu senken.

### Lösung

Diese Aufgabe wird erfindungsgemäß durch ein Befestigungselement mit den im Anspruch 1 genannten Merkmalen gelöst. Vorteilhafte Ausgestaltungen sind Gegenstand der Unteransprüche.

Erfindungsgemäß umfasst das Befestigungselement zur Befestigung eines Kabels an einer Sitzfedermatte eines Fahrzeugsitzes einen Haltebereich und mindestens einen Greifarm, welcher derart elastisch vorspannbar ist, dass ein zwischen dem Haltebereich und dem mindestens einen Greifarm befindliches Kabel von dem mindestens einen Greifarm gegen den Haltebereich gedrückt wird.

Zur Montage des Kabels an der Sitzfedermatte muss dieses lediglich gegen den Haltebereich des Befestigungselements gedrückt und der Greifarm unter das Kabel gezogen werden. Danach ist das Kabel zwischen Greifarm und Haltebereich fixiert. Der Montageaufwand ist somit vorteilhaft vereinfacht. Ebenso wird kein zusätzlicher Kabelbinder benötigt. Des Weiteren schließen der Greifarm und der Haltebereich an einen Randbereich an, welcher an einem Federdraht einer Sitzfedermatte befestigbar ist. Somit wird kein zusätzliches Teil zur Anbringung des Befestigungselements an der Sitzfedermatte benötigt.

Ferner ist der Haltebereich zwischen einem ersten Randbereich und einem zweiten Randbereich angeordnet. Dabei schließt vorteilhaft an den ersten Randbereich ein erster Greifarm und an den zweiten Randbereich ein zweiter Greifarm an, wobei das freie Ende des ersten Greifarms dem zweiten Randbereich und das freie Ende des zweiten Greifarms dem ersten Randbereich zugewandt ist. Dadurch ist das Kabel von drei Seiten von dem ersten Greifarm, von dem zweiten Greifarm und von dem Haltebereich umschlossen und sicher gehalten.

In einer alternativen Ausgestaltung ist der Greifarm derart elastisch ausgestaltet, dass er bei der Montage des Kabels durch dieses zunächst ausgelenkt wird. Wenn das Kabel dann die Endposition an dem Haltebereich erreicht hat gleitet der Greifarm aufgrund seiner Elastizität selbstständig an dem Kabel vorbei unter das Kabel. Dadurch braucht der Greifarm nicht unter das Kabel gezogen zu werden und die Montage ist noch weiter vereinfacht.

Der Greifarm ist dabei vorteilhaft um eine Schwenkachse schwenkbar, wodurch er verhältnismäßig leicht unter das Kabel gezogen werden kann.

Gemäß einer vorteilhaften Ausgestaltung der Erfindung sind der Haltebereich, der Greifarm und der Randbereich einstückig ausgeführt, wodurch die Herstellung des Befestigungselements vereinfacht ist.

Gemäß einer weiteren Ausgestaltung der Erfindung weist der Haltebereich einen ersten Steg und einen zweiten Steg auf, welche an den Greifarm angrenzen. Dadurch ist das Kabel in seiner Lage zusätzlich stabilisiert.

Zur verbesserten Fixierung des Kabels weisen dabei der erste Greifarm und/oder der zweite Greifarm und/oder der erste Steg und/oder der zweite Steg Spitzen zur Fixierung des Kabels auf. Besagte Spitzen sind dabei auf der dem Kabel zugewandten Oberfläche der Greifarme sowie der Stege angebracht.

Die o.g. Aufgabe wird auch durch eine Sitzfedermatte mit den im Anspruch 6 genannten Merkmalen gelöst, welche mindestens ein erfindungsgemäßes Befestigungselement zur Befestigung eines Kabels umfasst.

Die o.g. Aufgabe wird auch durch einen Fahrzeugsitz mit den im Anspruch 7 genannten Merkmalen gelöst, welche mindestens eine erfindungsgemäße Sitzfedermatte oder mindestens ein erfindungsgemäßes Befestigungselement umfasst.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:
- Fig. 1:: eine schematische Darstellung eines Fahrzeugsitzes,
- Fig. 2:: eine Draufsicht auf ein Befestigungselement, in Einführrichtung gesehen,
- Fig. 3:: eine Seitenansicht eines Befestigungselements, in Verlegerichtung gesehen, und
- Fig. 4:: eine Draufsicht auf eine Sitzfedermatte, in Vertikalrichtung von oben gesehen.

Ein Fahrzeugsitz 1 für ein Kraftfahrzeug weist ein Sitzteil 2 und eine daran angebrachte, neigungseinstellbare Rückenlehne 10 auf.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Mittels eines seitlich angeordneten, manuell zu bedienenden Lehneneinstellbeschlags 19 ist die Rückenlehne 10 neigungseinstellbar, das bedeutet, der Winkel zwischen dem Sitzteil 2 und der Rückenlehne 10 ist einstellbar. Alternativ ist auch ein elektrischer Antrieb denkbar.

Mittels eines Höheneinstellers ist die Höhe des Sitzteils 2 und vorliegend zugleich der Rückenlehne 10 des Fahrzeugsitzes 1 über dem Fahrzeugboden einstellbar.

Zum Antrieb des Höheneinstellers ist vorliegend eine manuell zu bedienende Antriebseinrichtung 7 vorgesehen. Alternativ ist auch ein elektrischer Antrieb denkbar.

Mittels eines Längseinstellers, welcher zwei mit dem Fahrzeugboden verbundene Unterschienen 5 sowie zwei mit dem Fahrzeugsitz 1 verbundene Oberschienen 3 aufweist, ist der Fahrzeugsitz 1 längseinstellbar, das bedeutet, das Sitzteil 2 ist zusammen mit der Rückenlehne 10 in Längsrichtung, welche annähernd der Fahrtrichtung entspricht, einstellbar. Dazu ist jede der Oberschienen 3 in jeweils einer der parallel in Längsrichtung verlaufenden Unterschienen 5 verschiebbar geführt und mittels einer Verriegelungsvorrichtung mit der jeweiligen Unterschiene 5 verriegelbar. Alternativ ist auch hier ein elektrischer Antrieb denkbar.

Die Längsrichtung verläuft dabei senkrecht zu der Querrichtung, vorliegend jedoch leicht gegenüber der Fahrtrichtung geneigt, und somit auch annähernd senkrecht zu der Vertikalrichtung.

Das Sitzteil 2 umfasst einen Sitzrahmen 4, welcher zwei annähernd in Fahrtrichtung verlaufende Seitenteile 6 sowie ein in Querrichtung verlaufendes, im in Fahrtrichtung hinteren Bereich des Sitzrahmens 4 angebrachtes hinteres Querrohr 8 umfasst. Im in Fahrtrichtung vorderen Bereich des Sitzrahmens 4 ist ein weiteres, auch in Querrichtung verlaufendes vorderes Querrohr 9 angeordnet. Das hintere Querrohr 8 und das vordere Querrohr 9 sind mit den Seitenteilen 6 des Sitzrahmens 4 verbunden.

Das Sitzteil 2 umfasst weiter eine Sitzschale 14, welche auf den Seitenteilen 6 und auf dem vorderen Querrohr 9 des Sitzrahmens 4 aufliegt. An der Sitzschale 14 und an dem hinteren Querrohr 8 des Sitzrahmens 4 ist eine Sitzfedermatte 12 angebracht, welche mehrere Federdrähte 20 aufweist. Auf der dem Fahrzeugboden abgewandten Seite der Sitzschale 14 und der Sitzfedermatte 12 ist ein Sitzkissen 11 vorgesehen, welches als Schaumteil ausgebildet ist.

Auch die Rückenlehne 10 ist mit einem Schaumteil gepolstert und, ebenso wie das Sitzkissen 11, mit einem Bezug überzogen. Das Sitzkissen 11 sowie die Sitzfedermatte 12 erhöhen maßgeblich den Sitzkomfort für einen Insassen des Fahrzeugsitzes 1.

Die Federdrähte 20 der Sitzfedermatte 12 sind meanderförmig ausgestaltet und verlaufen im Wesentlichen in Längsrichtung. Das bedeutet, entlang der Länge eines Federdrahtes 20 wechseln sich annähernd in Längsrichtung verlaufende Bereiche mit annähernd in Querrichtung verlaufenden Bereichen ab. Jeder Federdraht 20 ist vorliegend an genau zwei Stellen mit dem Sitzteil 2 verbunden, welche in Längsrichtung voneinander beabstandet sind. Die Federdrähte 20 sind elastisch verformbar. Unter Belastung durch das Gewicht eines Insassen federn die Federdrähte 20 der Sitzfedermatte 12 in Vertikalrichtung nach unten ein und bewirken auf diese Art eine Federung des Sitzteils 2.

Die Federdrähte 20 der Sitzfedermatte 12 weisen je einen ersten Befestigungsbereich 22 auf, mittels welchem sie mit der Sitzschale 14 verbunden sind. Ferner weisen die Federdrähte 20 je einen zweiten Befestigungsbereich 24 auf, mittels welchem sie mit dem hinteren Querrohr 8 des Sitzrahmens 4 verbunden sind. Der zweite Befestigungsbereich 24 jedes Federdrahts 20 ist in Form eines Hakens gebogen, welcher das hintere Querrohr 8 des Sitzrahmens 4 umschließt. Zusätzlich sind Verbindungselemente 60 vorgesehen, welche vorliegend aus Plastik bestehen und welche zwei oder mehr Federdrähte 20 in Querrichtung miteinander verbinden.

An den Federdrähten 20 der Sitzfedermatte 12 sind ferner Befestigungselemente 30 angebracht, welche zur Befestigung eines Kabels 50 dienen. Das Kabel 50 ist vorliegend ein Elektrokabel zur Stromversorgung einer Sitzheizung. Es kann jedoch auch ein Elektrokabel für eine Sitzverstellung oder auch ein Bowdenzug sein.

Die Richtung, in welche die Mittelachse des Kabels 50 in der Nähe des Befestigungselements 30 verläuft, wird im Folgenden als Verlegerichtung V bezeichnet.

Zur Befestigung an den Federdrähten 20 der Sitzfedermatte 12 weist das Befestigungselement 30 ein erstes Auge 52 und ein zweites Auge 54 auf, wobei die Augen 52, 54 von je einem Federdraht 20 durchdrungen sind. Auch alternative Befestigungsmöglichkeiten, beispielsweise durch Aufclipsen oder Ähnliches, sind denkbar.

An das erste Auge 52 schließt in Seitenrichtung S ein erster Randbereich 42 an, und an das zweite Auge 54 schließt in Seitenrichtung S ein zweiter Randbereich 44. In Seitenrichtung S zwischen dem ersten Randbereich 42 und dem zweiten Randbereich 44 und an beiden Randbereichen 42, 44 anschließend ist ein Haltebereich 32 vorgesehen.

Die Seitenrichtung S verläuft dabei senkrecht zur Verlegerichtung V. Eine weitere Richtung, welche sowohl senkrecht zur Seitenrichtung S als auch senkrecht zur Verlegerichtung V orientiert ist, wird im Folgenden als Einführrichtung E bezeichnet. Die Randbereiche 42, 44 sind flach ausgebildet und liegen in einer Ebene senkrecht zur Einführrichtung E. Der Haltebereich 32 ist von der Ebene, in welcher die Randbereiche 42, 44 liegen, in Einführrichtung E weg gewölbt. Zwischen dieser Ebene und dem Haltebereich 32 ist ein Aufnahmeraum 56 gebildet, in welchem das Kabel 50 verlegt ist.

An den ersten Randbereich 42 und an den Haltebereich 32 anschließend ist ein erster Greifarm 34 angebracht. Der erste Greifarm 34 ist dabei um eine erste Schwenkachse 38 schwenkbar. Die erste Schwenkachse 38 liegt in der Ebene, in welcher die Randbereiche 42, 44 liegen, und verläuft in Verlegerichtung V. Ebenso ist an den zweiten Randbereich 44 und an den Haltebereich 32 anschließend ein zweiter Greifarm 36 angebracht. Der zweite Greifarm 36 ist dabei um eine zweite Schwenkachse 40 schwenkbar, wobei auch die zweite Schwenkachse 40 in der Ebene liegt, in welcher die Randbereiche 42, 44 liegen, und in Verlegerichtung V verläuft.

Die Greifarme 34, 36, insbesondere die an die Schwenkachsen 38, 40 angrenzenden Bereiche der Greifarme 34, 36, sind elastisch verformbar. Aufgrund dieser Elastizität ist die erwähnte Schwenkbewegung um die jeweilige Schwenkachse 34, 36 möglich.

Befindet sich das Kabel 50 in dem Aufnahmeraum 56, welcher von dem ersten Greifarm 34, dem zweiten Greifarm 36 und dem Haltebereich 32 begrenzt wird, wie im vorliegenden Ausführungsbeispiel dargestellt, so stehen der erste Greifarm 34 und der zweite Greifarm 36 unter einer Vorspannung. Durch besagte Vorspannung werden die Greifarme 34, 36 auf den Haltebereich 32 zu gedrückt. Dadurch drücken die Greifarme 34, 36 das in dem Aufnahmeraum 56 befindliche Kabel 50 gegen den Haltebereich 32.

Der Haltebereich 32 umfasst einen ersten Steg 46 und einen zweiten Steg 48, welche in Verlegerichtung V zueinander versetzt sind und parallel verlaufen. Jeder Steg 46, 48 des Haltebereichs 32 ist dabei sowohl mit dem ersten Randbereich 42 als auch mit dem zweiten Randbereich 44 verbunden.

In Verlegerichtung V zwischen den Stegen 46, 48 des Haltebereichs 32 befinden sich die Greifarme 34, 36. Der erste Steg 46 des Haltebereichs 32 grenzt somit in Verlegerichtung V an den ersten Greifarm 34 an und der zweite Steg 48 des Haltebereichs 32 grenzt somit in Verlegerichtung V an den zweiten Greifarm 36 an. Die Greifarme 34, 36 sind ebenfalls in Verlegerichtung V zueinander versetzt angeordnet und verlaufen parallel zueinander und zu den Stegen 46, 48.

Der erste Greifarm 34, welcher dem ersten Steg 46 benachbart angeordnet ist, ist dabei mit dem ersten Randbereich 42 verbunden. Der zweite Greifarm 36, welcher dem zweiten Steg 48 benachbart angeordnet ist, ist dabei mit dem zweiten Randbereich 44 verbunden. Der Verbindungsbereich des ersten Randbereichs 42 mit dem ersten Greifarm 34 definiert dabei die erste Schwenkachse 38 und der Verbindungsbereich des zweiten Randbereichs 44 mit dem zweiten Greifarm 36 definiert die zweite Schwenkachse 40. Um die jeweiligen Schwenkachsen 38, 40 ist, wie bereits erwähnt, aufgrund der Elastizität der Greifarme 34, 36 eine Schwenkbewegung möglich.

Das der ersten Schwenkachse 38 abgewandte freie Ende des ersten Greifarms 34 ist dem zweiten Randbereich 44 zugewandt und das der zweiten Schwenkachse 40 abgewandte freie Ende des zweiten Greifarms 36 ist dem ersten Randbereich 42 zugewandt.

Zur Montage des Kabels 50 an dem Befestigungselement 30 wird das Kabel 50 zunächst von unten in Einführrichtung E gegen die Greifarme 34, 36 gedrückt. Die Greifarme 34, 36 geben daraufhin, aufgrund ihrer Elastizität, nach und schwenken um die Schwenkachsen 38, 40 nach oben. Dabei biegen sich die Greifarme 34, 36 in Einführrichtung E nach oben zum Haltebereich 32 hin.

Das Kabel 50 wird bis zur Anlage an den Haltebereich 32 bewegt, wobei die Greifarme 34, 36 den Haltebereich 32 zwischen den Stegen 46, 48 teilweise durchdringen.

Danach werden die Greifarme 34, 36 entgegen der Einführrichtung E an dem Kabel 50 vorbei nach unten gezogen, wobei sie um die Schwenkachsen 38, 40 zurück schwenken. Dabei gleiten die Greifarme 34, 36 an dem Kabel 50 vorbei. Aufgrund der erwähnten Vorspannung drücken die Greifarme 34, 36 danach das Kabel 50 gegen den Haltebereich 32.

Es ist auch denkbar, dass die Greifarme 34, 36 derart elastisch ausgestaltet sind, dass diese aufgrund ihrer Elastizität selbstständig an dem Kabel 50 vorbei nach unten gleiten.

Alternativ kann die Montage des Kabels 50 an dem Befestigungselement 30 auch dadurch erfolgen, dass zunächst die Greifarme 34, 36 nach unten, also entgegen der Einführrichtung E, gezogen werden, wobei sie um die Schwenkachsen 38, 40 nach unten schwenken. Anschließend wird das Kabel 50 von unten her in Einführrichtung E zwischen den Greifarmen 34, 36 hindurch nach oben bis zur Anlage an den Haltebereich 32 geführt. Nach Loslassen der Greifarme 34, 36 drücken diese, aufgrund der erwähnten Vorspannung, danach das Kabel 50 gegen den Haltebereich 32.

Im vorliegende Ausführungsbeispiel weisen die Stege 46, 48 sowie die Greifarme 34, 36 zur zusätzlichen Fixierung des Kabels 50 jeweils auf der dem Kabel 50 zugewandten Seite eine raue Oberfläche auf. Diese rauen Oberflächen umfassen dabei vorliegend zackenförmige Spitzen 58, welche sich bedingt durch die erwähnte Vorspannung der Greifarme 34, 36 geringfügig in die Außenhaut der Isolierung des Kabels 50 eingraben.

Alternativ können die Oberflächen der Stege 46, 48 sowie der Greifarme 34, 36 auch glatt oder leicht rau ausgeführt sein. Auch gemischte Ausführungen, beispielsweise glatte oder leicht raue Oberfläche der Stege 46, 48 und Spitzen 58 auf den Oberflächen der Greifarme 34, 36, sind denkbar.

Im hier dargestellten Ausführungsbeispiel entspricht die Einführrichtung E der Vertikalrichtung. Weiter entspricht die Seitenrichtung S der Querrichtung und die Verlegerichtung V entspricht der Längsrichtung. Es sind aber selbstverständlich auch andere Anordnungen und Ausrichtungen, insbesondere des Kabels 50, denkbar.

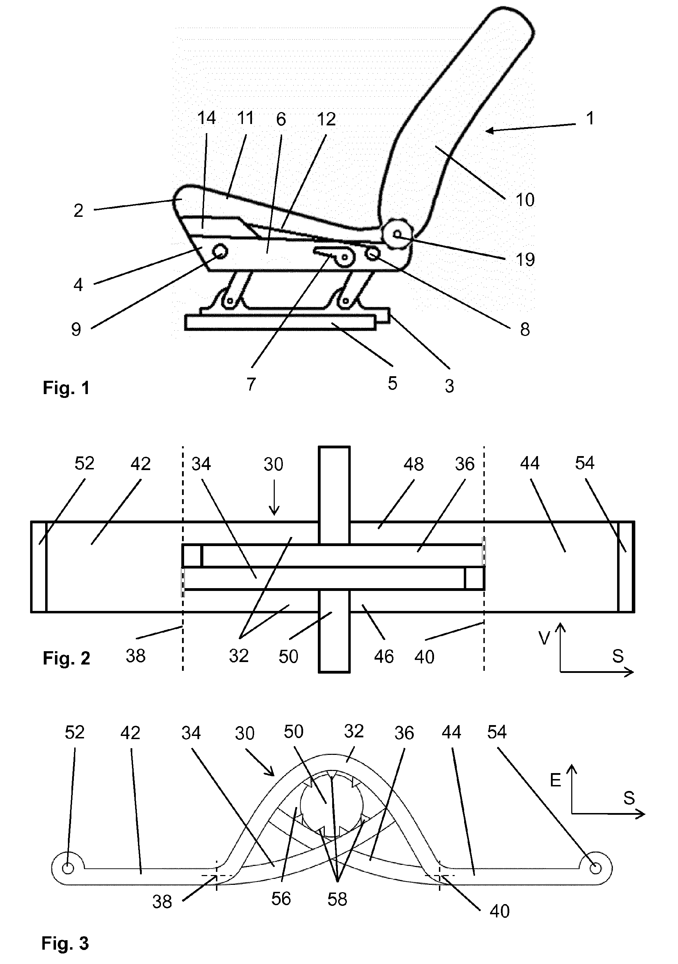

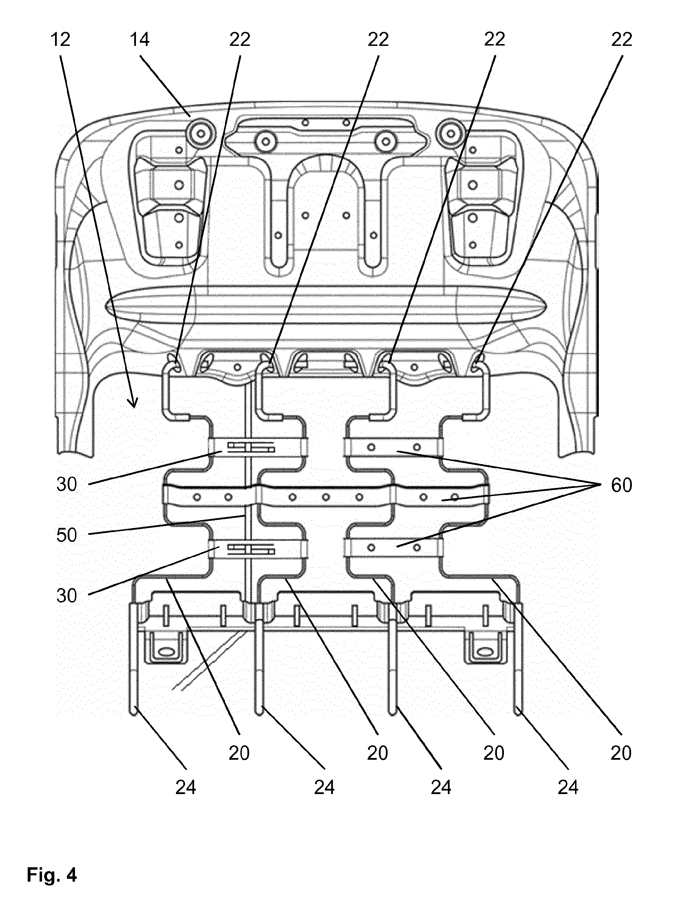

In der Fig. 2 ist das Befestigungselement 30 in Einführrichtung, also in Vertikalrichtung von unten, dargestellt. Dabei sind die Stege 46, 48 des Haltebereichs 32 teilweise durch das Kabel 50 verdeckt und das Kabel 50 ist teilweise durch die Greifarme 34, 36 verdeckt. In der Fig. 4 sind die Befestigungselemente 30 in Vertikalrichtung von oben dargestellt. Dabei sind die jeweiligen Greifarme 34, 36 teilweise durch das Kabel 50 verdeckt und das Kabel 50 ist teilweise durch die jeweiligen Stege 46, 48 des jeweiligen Haltebereichs 32 verdeckt.

### Bezugszeichenliste

- 1: Fahrzeugsitz
- 2: Sitzteil
- 3: Oberschiene
- 4: Sitzrahmen
- 5: Unterschiene
- 6: Seitenteil
- 7: Antriebseinrichtung
- 8: hinteres Querrohr
- 9: vorderes Querrohr
- 10: Rückenlehne
- 11: Sitzkissen
- 12: Sitzfedermatte
- 14: Sitzschale
- 19: Lehneneinstellbeschlag
- 20: Federdraht
- 22: erster Befestigungsbereich
- 24: zweiter Befestigungsbereich
- 30: Befestigungselement
- 32: Haltebereich
- 34: erster Greifarm
- 36: zweiter Greifarm
- 38: erste Schwenkachse
- 40: zweite Schwenkachse
- 42: erster Randbereich
- 44: zweiter Randbereich
- 46: erster Steg
- 48: zweiter Steg
- 50: Kabel
- 52: erstes Auge
- 54: zweites Auge
- 56: Aufnahmeraum
- 58: Spitzen
- 60: Verbindungselement

- V: Verlegerichtung
- E: Einführrichtung
- S: Seitenrichtung

## Patentansprüche

1. Befestigungselement (30) zur Befestigung eines Kabels (50) an einer Sitzfedermatte (12) eines Fahrzeugsitzes (1), wobei das Befestigungselement (30) an einem Federdraht (20) der Sitzfedermatte (12) anbringbar ist, umfassend einen Haltebereich (32) und mindestens einen Greifarm (34, 36), welcher derart elastisch vorspannbar ist, dass ein zwischen dem Haltebereich (32) und dem mindestens einen Greifarm (34, 36) befindliches Kabel (50) von dem mindestens einen Greifarm (34, 36) gegen den Haltebereich (32) gedrückt wird, wobei der Greifarm (34, 36) und der Haltebereich (32) an einen Randbereich (42, 44) anschließen, welcher an einem Federdraht (20) der Sitzfedermatte (12) befestigbar ist, wobei der Haltebereich (32) zwischen einem ersten Randbereich (42) und einem zweiten Randbereich (44) angeordnet ist, wobei an den ersten Randbereich (42) ein erster Greifarm (34) anschließt, und dass an den zweiten Randbereich (44) ein zweiter Greifarm (36) anschließt, wobei das freie Ende des ersten Greifarms (34) dem zweiten Randbereich (44) zugewandt ist, und wobei das freie Ende des zweiten Greifarms (36) dem ersten Randbereich (42) zugewandt ist.

2. Befestigungselement (30) nach Anspruch 1, **dadurch gekennzeichnet, dass** der Greifarm (34, 36) um eine Schwenkachse (38, 40) schwenkbar ist.

3. Befestigungselement (30) nach einem der Ansprüche 1 oder 2, **dadurch gekennzeichnet, dass** der Haltebereich (32), der Greifarm (34, 36) und der Randbereich (42, 44) einstückig ausgeführt sind.

4. Befestigungselement (30) nach einem der Ansprüche 1 bis 3, **dadurch gekennzeichnet, dass** der Haltebereich (32) einen ersten Steg (46) und einen zweiten Steg (48) aufweist, welche an den Greifarm (34, 36) angrenzen.

5. Befestigungselement (30) nach Anspruch 4 **dadurch gekennzeichnet, dass** der erste Greifarm (34) und/oder der zweite Greifarm (36) und/oder der erste Steg (46) und/oder der zweite Steg (48) Spitzen (58) zur Fixierung des Kabels (50) aufweisen.

6. Sitzfedermatte (12), umfassend mindestens ein Befestigungselement (30) nach einem der vorstehenden Ansprüche.

7. Fahrzeugsitz (1), umfassend mindestens eine Sitzfedermatte (12) nach Anspruch 6 oder umfassend mindestens ein Befestigungselement (30) nach einem der Ansprüche 1 bis 5.

## Claims

1. Fixing element (30) for fixing a cable (50) to a spring mat (12) of a vehicle seat (1), wherein the fixing element (30) may be attached to a spring wire (20) of the spring mat (12), the fixing element comprising a retaining region (32) and at least one gripping arm (34, 36) which may be elastically preloaded such that a cable (50) located between the retaining region (32) and the at least one gripping arm (34, 36) is pressed against the retaining region (32) by the at least one gripping arm (34, 36), wherein the gripping arm (34, 36) and the retaining region (32) adjoin an edge region (42, 44) which may be fixed to a spring wire (20) of the spring mat (12), wherein the retaining region (32) is arranged between a first edge region (42) and a second edge region (44), wherein a first gripping arm (34) adjoins the first edge region (42) and in that a second gripping arm (36) adjoins the second edge region (44), wherein the free end of the first gripping arm (34) faces the second edge region (44) and wherein the free end of the second gripping arm (36) faces the first edge region (42).

2. Fixing element (30) according to Claim 1, **characterized in that** the gripping arm (34, 36) is pivotable about a pivot axis (38, 40).

3. Fixing element (30) according to either of Claims 1 and 2, **characterized in that** the retaining region (32), the gripping arm (34, 36) and the edge region (42, 44) are designed in one piece.

4. Fixing element (30) according to one of Claims 1 to 3, **characterized in that** the retaining region (32) has a first connecting piece (46) and a second connecting piece (48) which are adjacent to the gripping arm (34, 36).

5. Fixing element (30) according to Claim 4, **characterized in that** the first gripping arm (34) and/or the second gripping arm (36) and/or the first connecting piece (46) and/or the second connecting piece (48) have pointed projections (58) for fixing the cable (50).

6. Spring mat (12) comprising at least one fixing element (30) according to one of the preceding claims.

7. Vehicle seat (1) comprising at least one spring mat (12) according to Claim 6 or comprising at least one fixing element (30) according to one of Claims 1 to 5.

## Revendications

1. Elément de fixation (30) pour la fixation d'un câble (50) à un tapis de siège élastique (12) d'un siège de véhicule (1), dans lequel l'élément de fixation (30) peut être posé sur un fil élastique (20) du tapis de siège élastique (12), comprenant une zone de maintien (32) et au moins un bras de saisie (34, 36), qui peut être précontraint élastiquement, de telle manière qu'un câble (50) se trouvant entre la zone de maintien (32) et ledit au moins un bras de saisie (34, 36) soit poussé contre la zone de maintien (32) par ledit au moins un bras de saisie (34, 36), dans lequel le bras de saisie (34, 36) et la zone de maintien (32) se raccordent à une zone de bord (42, 44), qui peut être fixée à un fil élastique (20) du tapis de siège élastique (12), dans lequel la zone de maintien (32) est disposée entre une première zone de bord (42) et une deuxième zone de bord (44), dans lequel un premier bras de saisie (34) se raccorde à la première zone de bord (42), et en ce qu'un deuxième bras de saisie (36) se raccorde à la deuxième zone de bord (44), dans lequel l'extrémité libre du premier bras de saisie (34) est tournée vers la deuxième zone de bord (44), et dans lequel l'extrémité libre du deuxième bras de saisie (36) est tournée vers la première zone de bord (42).

2. Elément de fixation (30) selon la revendication 1, **caractérisé en ce que** le bras de saisie (34, 36) peut pivoter autour d'un axe de pivotement (38, 40).

3. Elément de fixation (30) selon l'une des revendications 1 ou 2, **caractérisé en ce que** la zone de maintien (32), le bras de saisie (34, 36) et la zone de bord (42, 44) sont réalisés en une seule pièce.

4. Elément de fixation (30) selon l'une quelconque des revendications 1 à 3, **caractérisé en ce que** la zone de maintien (32) présente une première nervure (46) et une deuxième nervure (48), qui sont adjacentes au bras de saisie (34, 36).

5. Elément de fixation (30) selon la revendication 4, **caractérisé en ce que** le premier bras de saisie (34) et/ou le deuxième bras de saisie (36) et/ou la première nervure (46) et/ou la deuxième nervure (48) présentent des pointes (58) pour la fixation du câble (50).

6. Tapis de siège élastique (12), comprenant au moins un élément de fixation (30) selon l'une quelconque des revendications précédentes.

7. Siège de véhicule (1), comprenant au moins un tapis de siège élastique (12) selon la revendication 6 ou comprenant au moins un élément de fixation (30) selon l'une quelconque des revendications 1 à 5.
